# EUROPÄISCHE PATENTSCHRIFT

(11) **EP 0 582 067 B1**
(45) Veröffentlichungstag und Bekanntmachung des Hinweises auf die Patenterteilung: **20.12.1995**
(21) Anmeldenummer: 93109354.6
(22) Anmeldetag: 11.06.1993
(51) Int. Cl.: F16B 13/12

(54) **Schlagspreizdübel für die Verankerung in einem zylindrischen Bohrloch**
Expansion dowel anchored in cylindrical hole by means of impact
Cheville expansible à percussion pour les trous cylindriques

(30) Priorität: 06.08.1992 DE 4226011
(43) Veröffentlichungstag der Anmeldung: 09.02.1994
(73) Patentinhaber: fischerwerke Artur Fischer GmbH & Co. KG, D-72178 Waldachtal (DE)
(72) Erfinder: Fischer, Artur, Prof. Dr. h. c., D-7244 Waldachtal 3/Tumlingen (DE)

(56) Entgegenhaltungen:
- EP-A- 0 056 854
- DE-A- 3 511 784
- GB-A- 2 091 368
- LU-A- 32 039
- US-A- 1 392 108
- US-A- 1 619 569

## Beschreibung

Die Erfindung betrifft einen Schlagspreizdübel bestehend aus einer Spreizhülse und einem Spreizdorn für die Verankerung in einem zylindrischen Bohrloch gemäß der Gattung des Anspruches 1.

Aus der US-PS 1392108 ist ein gattungsgemäßer Schlagspreizdübel bekannt, der eine Spreizhülse mit einer sich verengenden Innenbohrung aufweist, in die zur Verankerung der Spreizhülse ein Spreizdorn eintreibbar ist. Die Mantelfläche der Spreizhülse des bekannten Schlagspreizdübels ist zu ihrem Einführende hin bis zu einer eine Schneide aufweisenden Ringbund verjüngt ausgebildet. Durch einen an der Spreizhülse angeordneten Kopfflansch befindet sich das Stirnende der Spreizhülse in einem Abstand zum Bohrlochgrund. Damit ist es möglich, den Ringbund mit dem einzutreibenden Spreizdorn in die Bohrlochwandung einzudrücken. Durch den Kopfflansch ist der bekannte Schlagspreizdübel nur in der Weise verwendbar, daß beim Setzen und Verankern der Schlagspreizdübel durch den zu befestigenden Gegenstand hindurch in den Verankerungsgrund eingetrieben werden muß. Damit bestimmt die Dicke des zu befestigenden Gegenstandes die Verankerungstiefe des Schlagspreizdübels im Verankerungsgrund. Desweiteren ist es nicht möglich, den Befestigungsgegenstand ohne Zerstörung des Schlagspreizdübels vom Ankergrund abzunehmen.

Aufgrund dieser Nachteile werden üblicherweise Schlagspreizdübel ohne Kopfflansch verwendet. Ein solcher aus der EP-A-0056854 bekannter Schlagspreizdübel benötigt zum Aufspreizen den Bohrlochgrund zur Abstützung der Spreizhülse beim Eintreiben des Spreizdorns. Durch den spitz zulaufenden Bohrlochgrund und den gleichzeitigen Schub in Richtung Bohrlochgrund beim Eintreiben des Spreizdornes wird die Aufspreizung des bekannten Schlagspreizdübels erheblich behindert. Die Ausstattung eines solchen Schlagspreizdübels mit einem eine Schneide aufweisenden Ringbund und dessen Eindrücken in die Bohrlochwandung ist daher kaum möglich.

Der Erfindung liegt daher die Aufgabe zugrunde, einen Schlagspreizdübel für die Verankerung in einem zylindrischen Bohrloch zu schaffen, der eine formschlüssige Verbindung in einem Betonteil bei relativ geringer Eintreibenergie ermöglicht.

Die Lösung dieser Aufgabe wird durch einen Schlagspreizdübel mit den Merkmalen des Anspruches 1 erreicht. Die Spreizhülse hat eine sich verjüngende Mantelfläche, an deren freiem Ende ein Ringbund absteht, der eine radial ausgerichtete, umlaufende Schneide hat. Beim Aufspreizen dringt der Ringbund mit seiner Schneide in die zylindrische Wandung des Bohrloches ein und stellt damit eine formschlüssige Verbindung zwischen Schlagspreizdübel und dem Mauerwerk her. Der zum Aufspreizen verwendete Spreizdorn besitzt einen Kegelansatz, dessen Mantelfläche in einem flacheren Winkel bezüglich der Mittelachse des Spreizdübels verläuft als die Wandung der sich konisch verengenden Innenbohrung. Dadurch wird erreicht, daß der Spreizdorn zu Beginn des Spreizvorganges im vorderen Bereich, wo sich der Ringbund befindet, an der verengenden Innenbohrung zur Anlage kommt. Dadurch wird beim Eintreiben des Spreizdorns der Spreizdruck direkt von innen am Ringbund wirksam. Durch diese Maßnahme ist ein Eindringen der umlaufenden Schneide des Ringbundes in Betonteile von sehr hoher Festigkeit möglich. Der Winkel der Mantelfläche kann beispielsweise 12°-14° besitzen, wobei die Wandung der konischen Innenbohrung des Spreizbereiches dann einen Winkel von etwa 15°-18° haben kann. Besonders günstige Verhältnisse werden bei einem Kegelansatzwinkel von 13° und einem Innenbohrungswinkel von 16° erreicht.

Durch die auf der Stirnseite der Spreizhülse aufgesetzte, aus Kunststoff bestehende Distanzkappe wird ein Aufnahmeraum geschaffen, in den der Kegelansatz des Spreizdorns beim Aufspreizvorgang eindringen kann. Um eine unnötige Behinderung des Aufspreizens der Spreizhülse zu vermeiden, wird ein Kunststoffmaterial für die Distanzkappe gewählt, welches möglichst gute Gleiteigenschaften aufweist. Durch eine solche Distanzkappe ist es möglich, auf einen am Spreizdübel angeordneten und sich an der Außenfläche des zu befestigenden Gegenstandes abstützenden Anschlagbund zu verzichten. Der Spreizdübel stützt sich beim Aufspreizen über die Distanzkappe am Bohrlochgrund ab ohne die Aufspreizung zu behindern. Der Schlagspreizdübel ist somit universell einsetzbar und ermöglicht die von der Verankerung getrennte Befestigung eines Befestigungsgegenstandes an einem Betonteil.

Die Erfindung wird nachfolgend anhand eines in der Zeichnung dargestellten Ausführungsbeispiels näher erläutert.

Es zeigen:
Figur 1 den Spreizdübel halbseitig im Schnitt und
Figur 2 den im Bohrloch eines Betonteiles verankerten Spreizdübel.

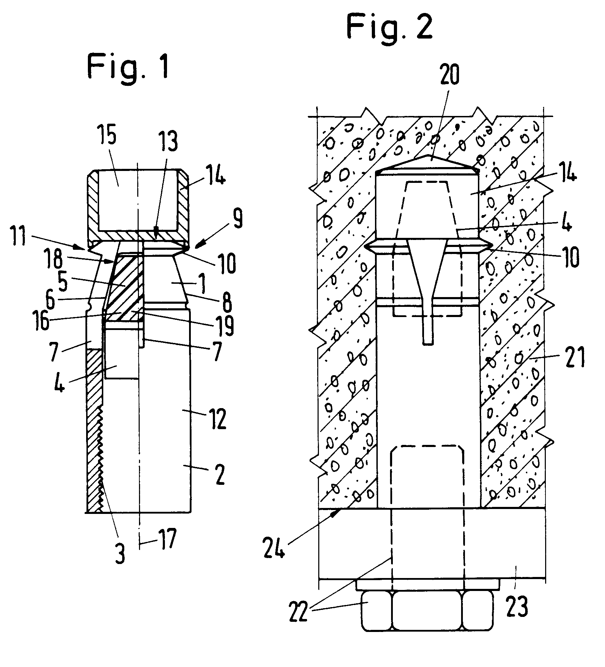

Der in Figur 1 dargestellte Spreizdübel besteht aus einer aufspreizbaren Spreizhülse 1, die in einen Befestigungsteil 2 mit einem Innengewinde 3 übergeht. Ein Spreizdorn 4 mit einem sich konisch verjüngenden Kegelansatz 5 liegt in der Spreizhülse 1 ein, wobei der Kegelansatz 5 sich in eine sich verengende Innenbohrung 6 der Spreizhülse 1 erstreckt. Die Spreizhülse 1 besitzt am Umfang verteilt angeordnete Längsschlitze 7.

Die Spreizhülse 1 hat eine sich konisch verjüngende Mantelfläche 8, die sich bis zu einem am freien Ende 9 der Spreizhülse 1 ausgebildeten Ringbund 10 erstreckt. Der Ringbund 10 besitzt eine radial ausgerichtete, umlaufende Schneide 11, mit einem Durchmesser, der dem Durchmesser des Schaftes 12 des Spreizdübels entspricht.

An der Stirnseite 13 der Spreizhülse 1 ist eine Distanzkappe 14 aufgesetzt, die einen Aufnahmeraum 15 hat, in den der Kegelansatz 5 eingetrieben werden kann.

Der Kegelansatz 5 besitzt eine Mantelfläche 16 mit einem Neigungswinkel gegenüber der Mittelachse 17, der kleiner ist als der Neigungswinkel der Innenbohrung 6. Dadurch ergibt sich ein Anlagepunkt 18 im vorderen Berich der Spreizhülse 1.

Die Mantelfläche 16 ist mit einem Gleitmaterial 19, beispielsweise mit einer Kunststoffummantelung, überzogen, um die Gleiteigenschaften des Spreizdorns 4 zu verbessern.

In Figur 2 ist der in einem Bohrloch 20 eines Betonteils 21 verankerte Spreizdübel dargestellt. Der Spreizdorn 4 ist mittels eines Einschlagwerkzeuges in die mit unterbrochenen Linien dargestellte Position eingetrieben worden und ragt mit einem Kegelansatz 5 in den Aufnahmeraum 15 der Distanzkappe 14. Der Ringbund 10 dringt durch die Bohrlochwandung in das Betonteil 21 ein. Der Spreizdübel ist somit fest im Betonteil 21 verankert, so daß mittels einer Schraube 22 ein Gegenstand 23 an der Wandoberfläche 24 in der dargestellten Weise befestigt werden kann.

Der Spreizdübel mit Spreizhülse 1 und Befestigungsteil 2 besteht vorzugsweise aus einem einstückigen, hülsenförmigen Metallteil. Anstelle eines Innengewindes kann am Schaft 12 auch ein Außengewinde ausgebildet sein, wobei dann selbstverständlich der Schaft aus dem Bohrloch genügend weit herausgeführt werden muß, um einen Gegenstand 23 mittels einer Schraubenmutter befestigen zu können.

## Patentansprüche

1. Schlagspreizdübel bestehend aus einer Spreizhülse (1) mit einer zum Einführende des Dübels sich verengenden Innenbohrung (6) und einem in die Innenbohrung (6) einschlagbaren Speizdorn (4), wobei die Mantelfläche (8) der Spreizhülse (1) zu ihrem Einführende hin bis zu einer eine Schneide (11) aufweisenden Ringbund (10) verjüngt ausgebildet ist, **dadurch gekennzeichnet**, daß der Spreizdorn (4) einen in die sich konisch verengende Innenbohrung (6) der Spreizhülse (1) beim Aufspreizvorgang eingreifenden Kegelansatz (5) hat, dessen Mantelfläche (16) in einem flacheren Winkel bezüglich der Mittelachse (17) des Spreizdübels verläuft als die sich konisch verengende Innenbohrung (6) der noch nicht aufgespreizten Spreizhülse (1), und daß an der Stirnseite (13) der Spreizhülse (1) eine Distanzkappe (14) aus Kunststoff oder einem anderen gleitfähigen Material aufgesetzt ist, die einen Aufnahmeraum (15) für den Kegelansatz (5) des bei aufgespreizter Spreizhülse eingetriebenen Spreizdorns (4) hat.

2. Schlagspreizdübel nach Anspruch1, **dadurch gekennzeichnet**, daß an der sich konisch verjüngenden Mantelfläche (8) der Spreizhülse (1) wenigstens ein zusätzlicher Ringbund mit umlaufender Schneide absteht.

3. Schlagspreizdübel nach Anspruch 1 oder 2, **dadurch gekennzeichnet**, daß der Durchmesser des Ringbundes (10) im ungespreizten Zustand gleich dem Durchmesser des Schafts (12) des Schlagspreizdübels ist.

4. Schlagspreizdübel nach Anspruch1, **dadurch gekennzeichnet**, daß die Mantelfläche (16) des Kegelansatzes (5) in einem Winkel von 12° bis 14° und die Wandung der konischen Innenbohrung (6) in einem Winkel von 15° bis 18° verläuft.

5. Schlagspreizdübel nach Anspruch1, **dadurch gekennzeichnet**, daß der Kegelansatz (5) des Spreizdorns (4) zu Beginn und während des Aufspreizvorganges im vorderen Teilbereich der sich verengenden Innenbohrung (6) anliegt.

6. Schlagspreizdübel nach Anspruch1, **dadurch gekennzeichnet**, daß der Spreizdorn (4) mit einer Gleitschicht (19) überzogen ist.

## Claims

1. Impact-type expansible plug consisting of an expansion sleeve (1) having an internal bore (6) narrowing towards the insertion end of the plug and an expansion mandrel (4) that can be driven into the internal bore (6), the outer surface (8) of the expansion sleeve (1) tapering towards its insertion end as far as an annular collar (10) which has a cutting edge (11), characterized in that the expansion mandrel (4) has a conical extension (5) which during the expanding operation engages in the conically narrowing internal bore (6) of the expansion sleeve (1) and the outer surface (16) of which extends at a flatter angle with respect to the central axis (17) of the expansible plug than does the conically narrowing internal bore (6) of the as yet unexpanded expansion sleeve (1), and in that on the end face (13) of the expansion sleeve (1) there is placed a spacer cap (14) of plastics material or some other material capable of sliding, which spacer cap has a receiving chamber (15) for the conical extension (5) of the expansion mandrel (4) that is driven in when the expansion sleeve is expanded.

2. Impact-type expansible plug according to Claim 1, characterized in that on the conically tapering outer surface (8) of the expansion sleeve (1) there projects at least one additional annular collar with a circumferential cutting edge.

3. Impact-type expansible plug according to Claim 1 or 2, characterized in that the diameter of the annular collar (10) in the unexpanded state is equal to the diameter of the shank (12) of the impact-type expansible plug.

4. Impact-type expansible plug according to Claim 1, characterized in that the outer surface (16) of the conical extension (5) extends at an angle of from 12° to 14° and the wall of the conical internal bore (6) extends at an angle of from 15° to 18°.

5. Impact-type expansible plug according to Claim 1, characterized in that the conical extension (5) of the expansion mandrel (4), at the start of and during the expanding operation, is in contact with the forward portion of the narrowing internal bore (6).

6. Impact-type expansible plug according to Claim 1, characterized in that the expansion mandrel (4) is coated with a low-friction layer (19).

## Revendications

1. Cheville expansible par percussion, se composant d'une douille expansible (1) présentant un canal intérieur (6) se rétrécissant vers l'extrémité d'introduction de la cheville, et d'un mandrin d'écartement (4) pouvant être enfoncé par percussion dans ledit canal intérieur (6), la surface (8) de l'enveloppe de la douille expansible (1) étant réalisée avec décroissance vers son extrémité d'introduction, jusqu'à un collet annulaire (10) muni d'un tranchant (11), caractérisée par le fait que le mandrin d'écartement (4) comporte un appendice tronconique (5) qui pénètre, lors du processus d'écartement, dans le canal intérieur (6) à rétrécissement tronconique de la douille expansible (1), appendice dont la surface (16) de l'enveloppe s'étend, par rapport à l'axe médian (17) de la cheville expansible, selon un angle plus aplati que le canal intérieur (6), à rétrécissement tronconique, de la douille expansible (1) non encore soumise à expansion ; et par le fait qu'un capuchon d'espacement (14) en une matière plastique ou en un autre matériau apte au glissement, ménagé à la face extrême (13) de la douille expansible (1), possède un réceptacle (15) destiné à l'appendice tronconique (5) du mandrin d'écartement (4) enfoncé lorsque ladite douille expansible est soumise à expansion.

2. Cheville expansible par percussion, selon la revendication 1, caractérisée par le fait qu'au moins un collet annulaire supplémentaire pourvu d'un tranchant circonférentiel dépasse de la surface (8), à décroissance tronconique, de l'enveloppe de la douille expansible (1).

3. Cheville expansible par percussion, selon la revendication 1 ou 2, caractérisée par le fait que, à l'état non déployé, le diamètre du collet annulaire (10) est égal au diamètre du fût (12) de ladite cheville expansible par percussion.

4. Cheville expansible par percussion, selon la revendication 1, caractérisée par le fait que la surface (16) de l'enveloppe de l'appendice tronconique (5) s'étend selon un angle de 12° à 14°, et la paroi du canal intérieur tronconique (6) s'étend selon un angle de 15° à 18°.

5. Cheville expansible par percussion, selon la revendication 1, caractérisée par le fait que l'appendice tronconique (5) du mandrin d'écartement (4) porte, au début et au cours du processus d'écartement, contre la région partielle antérieure du canal intérieur (6) se rétrécissant.

6. Cheville expansible par percussion, selon la revendication 1, caractérisée par le fait que le mandrin d'écartement (4) est revêtu d'une couche de glissement (19).
